# EUROPEAN PATENT APPLICATION

(11) **EP 4 722 015 A1**
(43) Date of publication of application: **08.04.2026**
(21) Application number: 25203633.0
(22) Date of filing: 22.09.2025
(51) Int. Cl.: B60L 1/00, B60L 3/12, B60L 53/10, B60L 53/16, B60L 53/30, H02J 7/60, H02J 7/80, B60L 3/00

(54) **DETECTION DEVICE AND DETECTION METHOD**

(30) Priority: 30.09.2024 JP 2024171542
(71) Applicant: Honda Motor Co., Ltd., Toyko 105-8404 (JP)
(72) Inventor: KURODA, Gen, Tokyo, 105-8404 (JP); NISHIMIYA, Ayumu, Tokyo, 105-8404 (JP); TAKENOYA, Hiromi, Tokyo, 105-8404 (JP); SHIMAZU, Kosuke, Tokyo, 105-8404 (JP)
(74) Representative: Weickmann & Weickmann PartmbB

(57) **Abstract**

A detection device of an embodiment includes a connection portion that is connectable to a charger connected to an external power source, and a connection detection unit that is provided in electric equipment having a power storage unit, which is charged with electric power from the external power source, and that is configured to detect a connection state of the charger and the connection portion, wherein the connection detection unit is configured to detect the charger is connected to the connection portion in a state in which the charger is connected to the connection portion and electric power is not being supplied from the charger to the electric equipment.

## Description

### BACKGROUND OF THE INVENTION

### Field of the Invention

The present invention relates to a detection device and a detection method.

### Description of Related Art

In recent years, to allow more people to secure access to reasonable, reliable, sustainable, and advanced energy, development and research regarding a secondary battery contributing to efficiency of energy has been conducted. In this context, in recent years, a charging control system that releases setting of a charging station on the basis of a connection state of a charger, which is provided in an electrified vehicle capable of being charged from an external power supply and can be operated is known (for example, see Japanese Unexamined Patent Application, First Publication No. 2024-027134).

### SUMMARY OF THE INVENTION

Japanese Unexamined Patent Application, First Publication No. 2024-027134 discloses a fitting detection circuit that is formed across a charger side and a vehicle side in a state in which a charging gun to be connected to the charger is connected to an inlet of a vehicle. Electric power is supplied to the fitting detection circuit from the charger side, and a fitting state of the charging gun and the charging inlet is detected on the basis of a voltage applied to a resistor provided in the fitting detection circuit.

However, since the detection of fitting is performed on the basis of electric power supplied from the charger side, for example, in a state in which the charger is not connected to the external power source, it is not possible to detect a fitting state even when the charging gun and the charging inlet fit each other.

An aspect of the present application provides a detection device and a detection method capable of detecting a connection state with respect to a charger without depending on the presence or absence of supply of electric power from the charger to electric equipment, and contributes to efficiency of energy.

A detection device and a detection method according to the invention employ the following configurations.
(1) A detection device according to an aspect of the invention includes a connection portion that is connectable to a charger connected to an external power source, and a connection detection unit that is provided in electric equipment having a power storage unit, which is charged with electric power from the external power source, and that is configured to detect a connection state of the charger and the connection portion, wherein the connection detection unit is configured to detect that the charger is connected to the connection portion in a state in which the charger is connected to the connection portion, and electric power is not being supplied from the charger to the electric equipment.
(2) In the aspect of (1) described above, the charger is configured such that one side is connectable to the external power source by a power plug connected to the charger and other side is connectable to the connection portion by a connection plug connected to the charger, and the connection detection unit is configured to detect that the connection plug is connected to the connection portion in a state in which the connection plug is connected to the connection portion and the power plug is not connected to the external power source.
(3) In the aspect of (2) described above, the detection device further includes an input unit configured to receive, as an input, electric power supplied from the charger and electric power supplied from the power storage unit in a state in which the charger is connected to the connection portion, and a control unit provided in the electric equipment, which is connected to both ends of a first resistor unit provided in the charger, wherein the input unit that is connected between the first resistor unit and the power storage unit on the electric equipment side, and, when the electric power is supplied from the charger and/or when the electric power is supplied from the power storage unit, that is configured to output the electric power supplied from the charger or the power storage unit to the control unit, and the connection detection unit is configured to detect the connection state on the basis of a voltage input to the control unit.
(4) In the aspect of (1) described above, the connection detection unit is configured to detect the connection state using the electric power supplied from the power storage unit when electric power is not supplied from the external power source.
(5) In the aspect of (3) described above, the control unit is configured to notify a user of the electric equipment of information indicating a state in which the charger is connected.
(6) A detection method according to another aspect of the present invention includes, by a computer of a detection device, detecting a connection state between a charger connected to an external power source and a connection portion provided in electric equipment having a power storage unit, which is charged with electric power from the external power source, and detecting that the charger is connected to the connection portion in a state in which the charger is connected to the connection portion and electric power is not being supplied from the charger to the electric equipment.

According to the aspects of (1) to (6) described above, it is possible to detect a connection state with respect to the charger without depending on the presence or absence of supply of electric power from the charger to electric equipment.

### BRIEF DESCRIPTION OF THE DRAWINGS

FIG. 1 is a diagram illustrating an example of a configuration of a charging system including a detection device of an embodiment.
FIG. 2 is a diagram specifically illustrating a connection state detection and a charging control in the embodiment.
FIG. 3 is a flowchart illustrating an example of a connection detection processing of the embodiment.
FIG. 4 is a flowchart illustrating another example of a connection detection processing of the embodiment.

### DETAILED DESCRIPTION OF THE INVENTION

Hereinafter, an embodiment of a detection device and a detection method of the present invention will be described with reference to the drawings. Hereinafter, description will be provided assuming that a detection device is mounted in electric equipment that can operate (work) using electric power supplied from an external power source. The electric equipment is, for example, a mobile object, but is not limited to a mobile object. The mobile object is, for example, a movable object such as a vehicle, an electrified robot, a vessel, a flying object (for example, a drone device), or an electrified scooter. Hereinafter, description will be provided assuming that the mobile object is a vehicle. Further, it is assumed that the vehicle is, for example, an electrified vehicle such as an electric vehicle, a hybrid vehicle, or a fuel cell vehicle.

### System Configuration

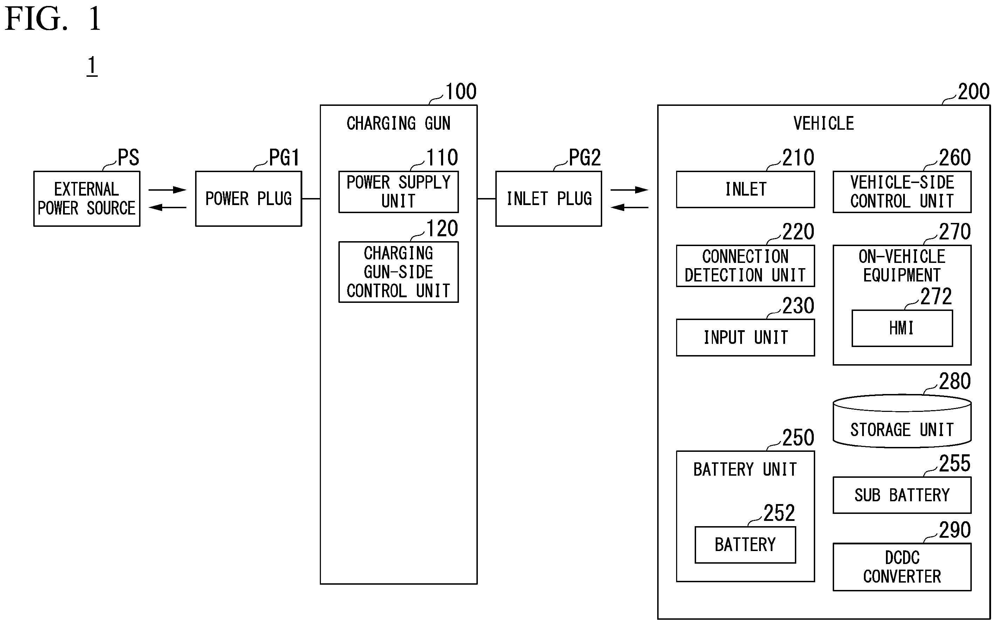

FIG. 1 is a diagram illustrating an example of a configuration of a charging system 1 including the detection device of the embodiment. The charging system 1 includes, for example, a charging gun 100 and a vehicle 200. In the configuration of the charging system 1, an external power source PS may be provided. The charging gun 100 is an example of a "charger" or a "charging facility". The vehicle 200 is an example of a "mobile object", and is an example of "electric equipment" in a broader term. The charging gun 100 is a gun type charger and is configured to be inserted and extracted (attached and detached) with respect to a connection portion (inlet) on the vehicle 200 side.

The charging gun 100 includes, for example, a power plug PG1, an inlet plug (an example of a connection plug) PG2, a power supply unit 110, and a charging gun-side control unit 120. The power supply unit 110 and the charging gun-side control unit 120 are implemented by, for example, a hardware processor such as a central processing unit (CPU) executing a program (software). A part or all of these components may be implemented by hardware (circuit unit; including circuitry) such as a large scale integration (LSI), an application specific integrated circuit (ASIC), a field-programmable gate array (FPGA), or a graphics processing unit (GPU) or may be implemented by software and hardware in cooperation. The program may be stored in advance in a storage device (a storage device including a non-transitory storage medium) such as a hard disk drive (HDD) of the charging gun 100 or a flash memory or may be stored in a removable storage medium such as a DVD or a CD-ROM and may be installed on the HDD of the charging gun 100 or the flash memory when the storage medium (non-transitory storage medium) is loaded into a drive device. The charging gun-side control unit 120 is an example of a "charger-side control unit".

The power plug PG1 is connected to a plug socket (also referred to as a socket or an outlet) provided on the external power source PS side and acquires electric power (for example, alternating-current power) from the external power source PS. The inlet plug PG2 is connected to the vehicle 200 and supplies the electric power from the external power source PS to the vehicle 200. For example, the power plug PG1 is freely attached and detached with respect to the plug socket on the external power source PS side manually, and the inlet plug PG2 is freely attached and detached with respect to the connection portion (inlet) on the vehicle 200 side manually.

The power supply unit 110 supplies the electric power supplied from the external power source PS via the power plug PG1, to the vehicle 200 on the basis of control information from the charging gun-side control unit 120. The power supply unit 110 may switch between on and off of supply of electric power according to an instruction from the charging gun-side control unit 120. The power supply unit 110 may adjust the magnitude of external power (alternating-current power) and may supply electric power to the vehicle 200 side. The power supply unit 110 may include a conversion unit that converts alternating-current power to direct-current power.

The charging gun-side control unit 120 is, for example, an electronic control unit (ECU) that controls all of various configurations in the charging gun 100. For example, the charging gun-side control unit 120 performs various kinds of control (switches between on and off of supply and controls an amount of electric power to be supplied and the like) regarding supply of electric power of the power supply unit 110. The charging gun-side control unit 120 is electrically connected to a control unit (vehicle-side control unit) on the vehicle 200 side when the inlet plug PG2 is connected to the vehicle 200, and performs transmission and reception, and the like of a signal (CPLT signal or the like) by a control pilot (CPLT) function or the like in a connection state. The CPLT function is, for example, a function of performing a check of the connection of the charging gun 100 side (charging facility side) and the vehicle 200 side, a start of electrical conduction with the check on the vehicle 200 side, and the like. In the CPLT function, for example, the transmission and reception of the CPLT signal is performed by a signal line provided separately from a charging cable (for example, a cable that supplies electric power from the charging gun 100 to a power storage unit of the vehicle 200). Information regarding a connection state of the charging cable, the propriety of supply of electric power from the external power source PS to the vehicle 200, a rated current, and the like can be acquired according to a state of the CPLT signal. The charging gun-side control unit 120 controls the power supply unit 110 on the basis of information obtained from the CPLT signal and supplies predetermined electric power to the vehicle 200 side.

On the charging gun 100 side, a resistor (for example, a first resistor unit described below or the like) for adjusting internal electric power may be provided. The first resistor unit, for example, limits a current inside the charging gun 100, acquires a given voltage, or reduces noise.

The vehicle 200 includes, for example, an inlet 210, a connection detection unit 220, an input unit 230, a switch unit 240, a battery unit 250, a sub-battery 255, a vehicle-side control unit 260, on-vehicle equipment 270, a storage unit 280, and a DCDC converter 290. The battery unit 250 and the vehicle-side control unit 260 are implemented by, for example, a hardware processor such as a CPU executing a program (software). A part or all of these components may be implemented by hardware (circuit unit; including circuitry) such as an LSI, an ASIC, an FPGA, or a GPU or may be implemented by software and hardware in cooperation. The program may be stored in advance in a storage device (a storage device including a non-transitory storage medium) such as an HDD of the vehicle 200 or a flash memory or may be stored in a removable storage medium such as a DVD or a CD-ROM and may be installed on the HDD of the vehicle 200 or the flash memory when the storage medium (non-transitory storage medium) is loaded into a drive device. The inlet 210 is an example of a "connection portion". The switch unit 240 is an example of a "switching unit". The vehicle-side control unit 260 is an example of a "control unit" or a "mobile object control unit". The inlet 210, the connection detection unit 220, the input unit 230, and the vehicle-side control unit 260 are an example of a "detection device".

The storage unit 280 may be implemented by various storage devices described above, a solid state drive (SSD), an electrically erasable programmable read only memory (EEPROM), a read only memory (ROM), or a random access memory (RAM). The storage unit 280 stores, for example, the program and other various kinds of information (for example, information for notifying of a user or the like of the vehicle 200).

The inlet 210 is configured to be inserted and extracted (attached and detached) with respect to the inlet plug PG2. For example, the inlet 210 is provided at a position of the vehicle 200 that can be exposed to the outside of the vehicle, and the inlet plug PG2 can be connected to the inlet 210. For example, the inlet 210 fits and is connected to the inlet plug PG2 and can receive electric power from the charging gun 100 side in the connection state. The inlet 210 and the inlet plug PG2 may be connected in a form (for example, an engagement structure or a screwing structure) other than fitting.

The connection detection unit 220 detects the connection state of the inlet 210 and the inlet plug PG2. The connection state is, for example, a state such as whether the inlet 210 and the inlet plug PG2 are correctly connected by fitting or the like (fit/non-fit). Details of the function of the connection detection unit 220 will be described.

The input unit 230 receives, as an input, at least one of electric power supplied from the charging gun 100 in a state in which the charging gun 100 (inlet plug PG2) is connected to the connection portion (inlet 210) and electric power (for example, the electric power of the sub-battery 255) supplied from the vehicle 200 side, and outputs the input electric power to the vehicle-side control unit 260 and the like.

The switch unit 240 has a switch that switches whether to supply electric power to the vehicle-side control unit 260. In the case of supplying electric power, the switch is brought into an on state (electrical conduction state), and in the case of not supplying electric power, the switch is brought into an off state (non-electrical conduction state or cutoff state). The switching of the switch is performed on the basis of an instruction received from the user of the vehicle 200, for example.

The battery unit (battery control unit) 250 includes, for example, a battery 252. The battery 252 is, for example, a secondary battery such as a lithium ion battery (LIB), a nickel hydrogen battery, or a solid-state battery. The sub-battery 255 is, for example, a lead storage battery. The battery 252 and the sub-battery 255 are an example of a "power storage unit". The battery unit 250 performs various kinds of control on the battery 252. The battery unit 250 may perform various kinds of control on the sub-battery 255. A voltage of the battery 252 is, for example, 96 [V]. A voltage of the sub-battery 255 is, for example, 12 [V].

For example, the battery unit 250 charges the electric power (high-voltage power) of the external power source PS supplied from the charging gun 100 in the battery 252 under the control of the vehicle-side control unit 260. The electric power of the battery 252 is stepped down to low-voltage power by the DCDC converter 290, and the low-voltage power is supplied to the sub-battery 255. The sub-battery 255 supplies electric power to various configurations (for example, the on-vehicle equipment 270) in the vehicle 200 under the control of the vehicle-side control unit 260. The battery unit 250 supplies electric power to an electric motor (a motor that is driven with electric power) mounted in the vehicle 200 under the control of the vehicle-side control unit 260. With this, the vehicle 200 can travel with electric power.

The battery unit 250 may include a battery sensor that measures a voltage value or a current value, a temperature, and the like of the battery 252 or detects a charging state (for example, state of charge SOC). In this case, a detection result of the battery sensor is output to the vehicle-side control unit 260.

The vehicle-side control unit 260 is an ECU that controls all of various configurations in the vehicle 200. For example, the vehicle-side control unit 260 controls connection detection processing by the connection detection unit 220, controls a switching operation by the switch unit 240, controls the operation of the battery unit 250, or performs supply control of electric power to the on-vehicle equipment 270, execution control of the on-vehicle equipment 270, and the like. The vehicle-side control unit 260 may perform control regarding traveling control or driving assistance control of the vehicle 200. Cooperative control of the respective components is performed by the vehicle-side control unit 260.

For example, when the inlet plug PG2 and the inlet 210 are connected, the vehicle-side control unit 260 is electrically connected to the charging gun-side control unit 120 and performs the transmission and reception of the signal by the CPLT function or the like in the connection state. The vehicle-side control unit 260 or the connection detection unit 220 performs connection detection or charging control of the battery 252 on the basis of information obtained from the CPLT signal, or the like.

The on-vehicle equipment 270 includes, for example, a human machine interface (HMI) 272. The HMI 272 presents various kinds of information to the user (occupant) of the vehicle 200 and receives an input operation of the user. The HMI 272 includes, for example, a display unit and a speaker. The display unit is, for example, a liquid crystal display (LCD) or an organic electroluminescence (EL) display. The display unit displays various images (also including a video) in the embodiment. The display unit may have a configuration capable of input and output as a touch panel. The speaker outputs prescribed sound (for example, alarm). The HMI 272 may be a microphone, a buzzer, a switch, a button, or the like in addition to (or instead of) the display unit and the speaker. For example, the HMI 272 may include a switch that switches whether to execute (or to end) charging of the battery 252.

In the on-vehicle equipment 270, various vehicle sensors, a navigation device, a traveling device that performs acceleration/deceleration or steering of the vehicle 200, a driving assistance device that controls at least one of steering or a speed of the vehicle 200 and executes driving assistance, and the like may be further provided. The vehicle sensors include a vehicle speed sensor that detects the speed of the vehicle 200, an acceleration sensor that detects an acceleration, a yaw rate sensor that detects a yaw rate (for example, a rotational angular velocity around a vertical axis passing through the center of gravity point of the vehicle 200), a steering angle sensor that detects a steering angle of the vehicle 200 (may be an angle of steered wheels or an operation angle of a steering wheel), and the like. Further, the vehicle sensors may be provided with a position sensor that detects a position of the vehicle 200, a measurement sensor (voltage sensor or current sensor) that measure a voltage value or a current value at a predetermined position. In addition, in the vehicle sensors, an object recognition sensor that recognizes an object in the vicinity of the vehicle 200 may be provided. At least a part of detection results of the vehicle sensors may be output to the vehicle-side control unit 260 or the connection detection unit 220, on-vehicle equipment other than the vehicle sensors, and the like.

The DCDC converter 290 steps downs the electric power of the battery 252. Further, on the vehicle 200 side, a resistor (a second resistor unit described below or the like) for adjusting internal electric power may be provided. The second resistor unit, for example, limits a current inside the vehicle 200, acquires a given voltage, or reduces noise.

### Detection of Connection State and Charging Control

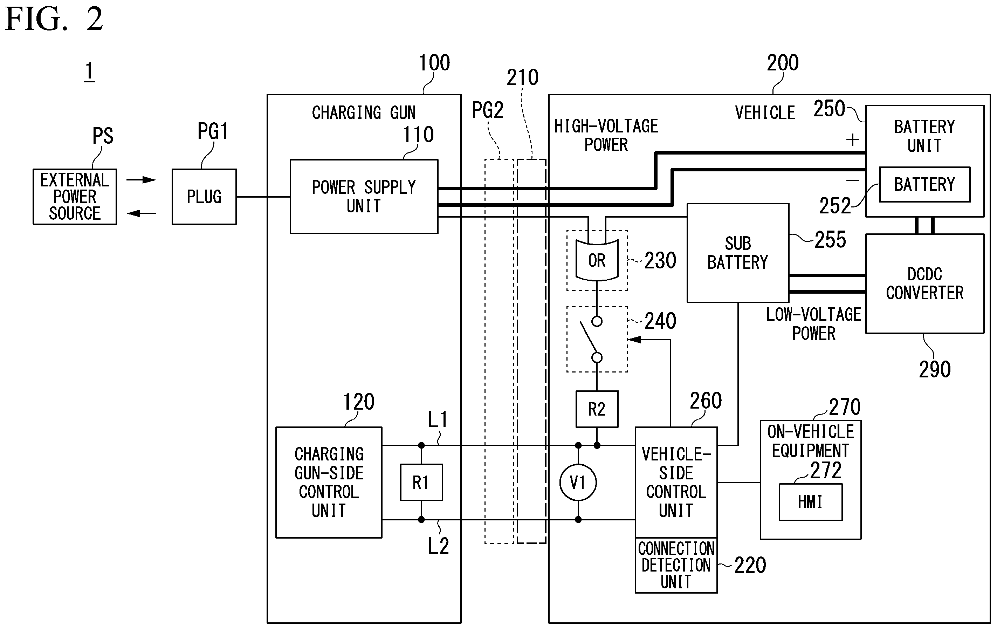

Next, detection of a connection state of the charging gun 100 and the vehicle 200 and charging control in the embodiment will be specifically described. FIG. 2 is a diagram specifically illustrating detection of a connection state and charging control in the embodiment. While FIG. 2 also illustrates a simple circuit configuration relating to detection of a connection state of the charging gun 100 side and the vehicle 200 side, an actual configuration is not limited to the example of FIG. 2.

In the example of FIG. 2, a charging cable is not illustrated, and signal lines parallel to the charging cable are primarily focused on. In the example of FIG. 2, two positive (+) and negative (-) signal lines L1 and L2 that connect the charging gun-side control unit 120 and the vehicle-side control unit 260 are illustrated. Further, in the example of FIG. 2, a first resistor unit R1 that adjusts electric power flowing in the signal lines L1 and L2 is provided on the charging gun 100 side, and a second resistor unit R2 that is connected one of the two signal lines L1 and L2 and adjusts the input electric power and a voltage sensor V1 that measures a voltage between the two signal lines L1 and L2 are provided on the vehicle 200 side. For example, cooperative processing regarding charging control is performed between the charging gun 100 (charging gun-side control unit 120) and the vehicle 200 (vehicle-side control unit 260) by switching between a charging start (for example, High) and a charging end (for example, Low) according to the CPLT signal via the signal lines. In the example of FIG. 2, it is assumed that a state in which the inlet plug PG2 and the inlet 210 are connected is illustrated.

In the embodiment, the detection of the connection state of the inlet plug PG2 and the inlet 210 not only is not only performed using electric power from the charging gun side (external power source) but also is performed even in a case where electric power is not being supplied to the charging gun 100 from the external power source PS (for example, a state in which the power plug PG1 is not connected to the plug socket of the external power source PS). With this, it is possible to prevent the user from forgetting to detach the inlet plug PG2 from the inlet 210 after charging and traveling the vehicle 200. Further, in the embodiment, with the detection of the connection state using the CPLT signal, it is possible to achieve a reduction in cost compared to a case of adding new equipment.

Specifically, as illustrated in FIG. 2, in a line for supplying electric power to the vehicle-side control unit 260 side, the input unit (OR circuit or logical sum circuit) 230 that receives, as an input, at least one of electric power supplied from the charging gun 100 side and electric power supplied from the sub-battery 255 is provided. The input unit 230 is provided on the vehicle 200 side and is connected, for example, between the first resistor unit R1 and the sub-battery 255. The first resistor unit R1 is connected between the charging gun-side control unit 120 and the vehicle-side control unit 260. For example, when electric power is supplied from the charging gun 100 and/or when electric power is supplied from the sub-battery 255, the input unit 230 outputs the electric power supplied from the charging gun 100 or the sub-battery 255 to the vehicle-side control unit 260.

With such a configuration, for example, when electric power from the external power source PS is not supplied since the power plug PG1 on the charging gun 100 side is not connected to the external power source PS, the input unit 230 can output the electric power supplied from the sub-battery 255, to the vehicle-side control unit 260. Accordingly, the connection detection unit 220 can detect the connection state of the charging gun 100 and the inlet 210 regardless of the presence or absence of electrical conduction of electric power to the charging gun 100. When electric power is received as an input from both the charging gun 100 and the sub-battery 255, the input unit 230 may output the electric power from the charging gun 100 with priority. In this case, when electric power is input from both the charging gun 100 and the sub-battery 255, the input unit 230 outputs an instruction to prevent the output of electric power from the sub-battery 255 to the battery unit 250, for example. With this, it is possible to prevent the power consumption of the sub-battery 255 in the detection of the connection state.

For example, the connection detection unit 220 detects the voltage of the signal lines L1 and L2 (the voltage of the first resistor unit R1) on the basis of the electric power (more specifically, electric power adjusted by the second resistor unit R2) input from the input unit 230 to the vehicle-side control unit 260 with the voltage sensor V1, and detects the connection state of the charging gun 100 on the basis of a detected voltage value. In this case, the connection detection unit 220 detects that the inlet plug PG2 and the inlet 210 are correctly connected (fit), for example, when the voltage value is less than a predetermined value, and detects that the inlet plug PG2 and the inlet 210 are not correctly connected (not fit or non-fit) when the voltage value is equal to or greater than the predetermined value. With this, it is possible to more appropriately detect the connection state of the charging gun 100 with a simple circuit configuration.

While the above-described processing is processing when the switch unit 240 is in the on state (electrical conduction state), the detection of the connection state or the charging control may be performed by switching between on and off of the switch. In the example of FIG. 2, the switch unit 240 is connected between the input unit 230 and the second resistor unit R2. The second resistor unit R2 has one side connected to the signal line L1 and the other side connected to the switch unit 240, and adjusts a voltage to the vehicle-side control unit 260 with respect to the electric power from the switch unit 240.

The switch unit 240 is switched between the on state (electrical conduction state) and the off state (non-electrical conduction state or cutoff state) according to control information from the vehicle-side control unit 260. The vehicle-side control unit 260 generates control information for switching between the on state and the off state on the basis of information instructed from the user via the HMI 272 and outputs the generated control information to the switch unit 240, for example. For example, the vehicle-side control unit 260 switches the switch unit 240 to the on state when an instruction to perform charging is received from the user, and switches the switch unit 240 to the off state when an instruction to end (stop) charging is received.

The vehicle-side control unit 260 switches the switch unit 240 to the on state, and when a voltage less than a predetermined value is applied to the vehicle-side control unit 260 (= a voltage across both ends of the first resistor unit R1 in fitting), instructs the battery unit 250 to start charging of the battery 252. With this, it is possible to execute processing such as the detection of the connection state or the charging control according to the users intention (request).

The vehicle-side control unit 260 may cause the HMI 272 to output information (image or sound) regarding the connection state of the inlet plug PG2 and the inlet 210 (for example, correctly connected/not correctly connected) or information regarding (image or sound) regarding the charging state (for example, charging start, during charging, charging end, or state of charge (SOC)) or may output the information to a terminal device (for example, a smartphone or a tablet terminal) that is used by the user and may notify the user of the connection state or the charging state.

For example, the vehicle-side control unit 260 causes the HMI 272 or the like to output information such as "charging gun is connected" when the inlet plug PG2 and the inlet 210 are in the connection state. Further, even when the switch unit is brought into the on state, when the voltage value measured by the voltage sensor V1 is equal to or greater than the predetermined value, the vehicle-side control unit 260 causes the HMI 272 or the like to output information such as "please check whether "plug (power plug PG1 or inlet plug PG2)" is correctly connected", message information for prompting the user to connect the plug, or the like. With this, it is possible to notify the user of more accurate information on the connection state or the charging control. With such notification, it is possible to prevent the user from traveling the vehicle 200 in a state in which the charging gun 100 is connected to the vehicle 200.

### Processing Flow

Next, processing that is executed by the charging system 1 in the embodiment will be described. Hereinafter, description will be provided primarily focusing on connection detection processing on the vehicle 200 side in the processing that is executed by the charging system 1.

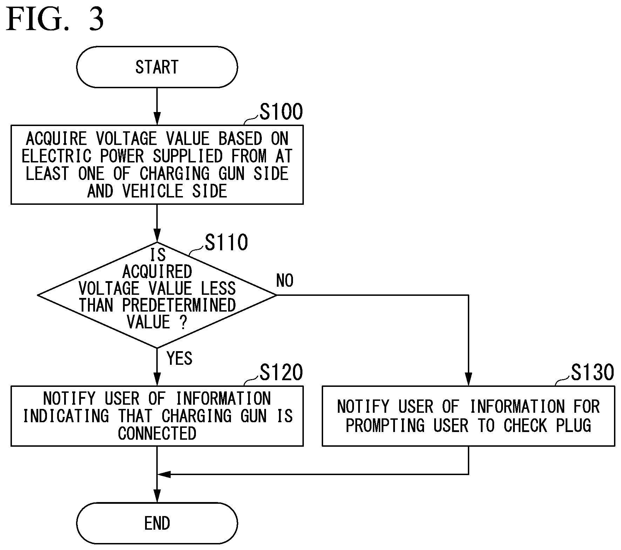

FIG. 3 is a flowchart illustrating an example of the connection detection processing of the embodiment. The processing of FIG. 3 is processing for detecting that the charging gun 100 is connected to the inlet 210 of the vehicle 200. In the example of FIG. 3, the connection detection unit 220 acquires a voltage value based on electric power supplied from at least one of the charging gun 100 side and the vehicle 200 side (Step S100).

Next, the connection detection unit 220 determines whether the acquired voltage value is less than the predetermined value (Step S110). When determination is made that the voltage value is less than the predetermined value, the vehicle-side control unit 260 causes the HMI 272 or the like to output information indicating that the charging gun 100 is connected and notifies the user of the information (Step S120). In the processing of Step S110, when determination is made that the acquired voltage value is not less than the predetermined value, the vehicle-side control unit 260 causes the HMI 272 to output information for prompting the user to check the plug (power plug PG1 or inlet plug PG2) and notifies the user of the information (Step S130). With this, the processing of this flowchart ends.

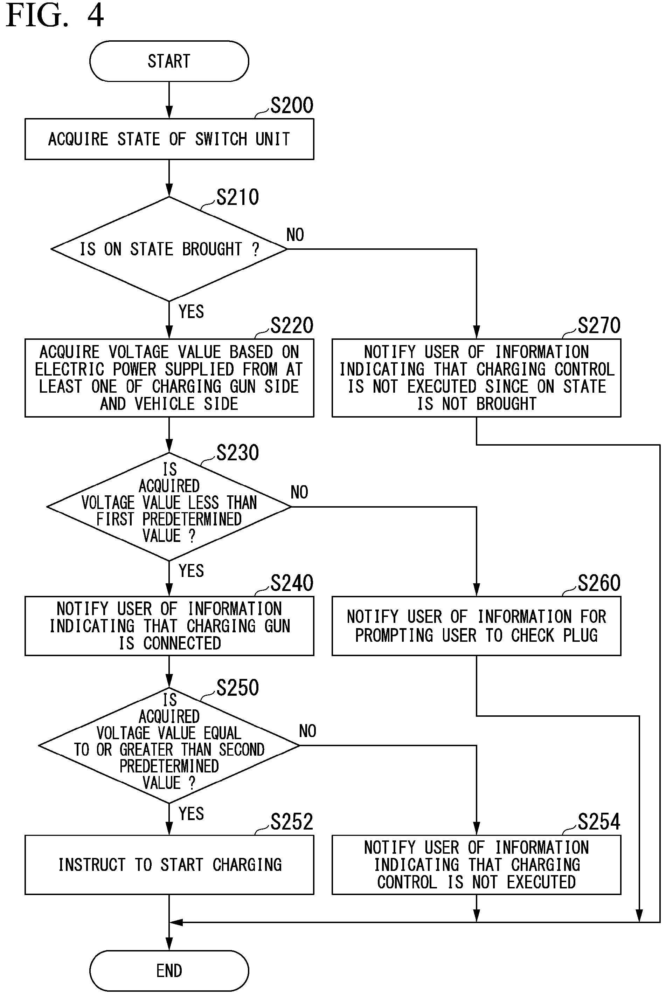

FIG. 4 is a flowchart illustrating another example of the connection detection processing of the embodiment. In the processing of FIG. 4, the vehicle-side control unit 260 acquires the state of the switch unit 240 (Step S200), and determines whether the switch unit 240 is in the on state (electrical conduction state) (Step S210). When determination is made that the switch unit 240 is in the on state, the connection detection unit 220 performs processing for detecting the connection state. Specifically, the connection detection unit 220 acquires a voltage value based on electric power supplied from at least one of the charging gun 100 side and the vehicle 200 side (Step S220). Next, the connection detection unit 220 determines whether the acquired voltage value is less than a first predetermined value (Step S230). Here, the first predetermined value is a threshold voltage for determining whether the charging gun is connected. When determination is made that the voltage value is less than the first predetermined value, the vehicle-side control unit 260 notifies the user of information indicating that the charging gun is connected (Step S240). Next, the connection detection unit 220 determines whether the acquired voltage value is equal to or greater than a second predetermined value (Step S250). When determination is made that the voltage value is equal to or greater than the second predetermined value, the vehicle-side control unit 260 instructs the battery unit 250 to start charging of the battery 252 (Step S252). With this, charging of the battery 252 is started using electric power from the charging gun 100. In the processing of Step S250, when determination is made that the acquire voltage value is not equal to or greater than the second predetermined value (less than the second predetermined value), the vehicle-side control unit 260 causes the HMI 272 to output information indicating that the charging control is not executed and notifies the user of the information (Step S254). Here, the second predetermined value is a threshold voltage for determining whether charging should be started, and is set to, for example, a value lower than the first predetermined value and lower than a voltage value acquired by the connection detection unit 220 when the system functions normally. For example, when the resistance value of the second resistor unit R2 is higher than during the normal time for some reason or when the resistance value of the first resistor unit R1 is lower than during the normal time, and the voltage value acquired by the connection detection unit 220 is less than the second predetermined value, the charging control is not executed.

In the processing of Step S230, when determination is made that the acquired voltage value is not less than the first predetermined value (equal to or greater than the first predetermined value), the vehicle-side control unit 260 causes the HMI 272 to output information for prompting the user to check the plug (power plug PG1 or inlet plug PG2) and notifies the user of the information (Step S260). In the processing of Step S210, when determination is made that the switch unit 240 is not in the on state, the vehicle-side control unit 260 causes the HMI 272 or the like to output information indicating that the charging control is not executed since the switch unit 240 is not in the on state (or information for prompting the user to bring the switch unit 240 into the on state) and notifies the user of the information (Step S270). With this, the processing of this flowchart ends.

### Modification Example

In the embodiment, even in a configuration in which the inlet plug PG2 is provided on the vehicle 200 side, and the inlet 210 is provided on the charging gun 100 side, the charging system 1 may apply a similar method and detect the connection state. As the connection state in the embodiment, an engagement portion may be provided in a fitting portion of the inlet plug PG2 and the inlet 210, and a state of half-fitting may be detected according to the state of the engagement state (for example, whether the inlet plug PG2 and the inlet 210 are correctly engaged).

As described above, the detection device of the embodiment includes the inlet 210 (an example of a connection portion) that is connectable to the charging gun 100 (an example of a charger) to be connected to the external power source, and the connection detection unit 220 provided in the vehicle 200 (an example of electric equipment) having the battery 252 (an example of a power storage unit), which is charged with electric power from the external power source, and configured to detect the connection state of the charging gun 100 and the inlet 210, and the connection detection unit 220 is configured to detect that the charging gun 100 is connected to the inlet 210 in a state in which the charging gun 100 is connected to the inlet 210 and electric power is not being supplied from the charging gun 100 to the vehicle 200. With this, it is possible to detect the connection state with respect to the charging gun 100 without depending on the presence or absence of supply of electric power from the charging gun 100.

For example, in the embodiment, the charging gun 100 is configured such that one side is connectable to the external power source PS by the power plug PG1 connected to the charging gun 100 and the other side is connectable to the inlet 210 by the inlet plug (an example of a connection plug) PG2 connected to the charging gun 100, and the connection detection unit 220 detects that the inlet plug PG2 is connected to the inlet 210 in a state in which the inlet plug PG2 is connected to the inlet 210 and the power plug PG1 is not connected to the external power source PS. That is, in the embodiment, not only in a state in which the power plug PG1 of the charging gun 100 is connected to the plug socket of the external power source PS, but also in a state in which the power plug PG1 of the charging gun 100 is not connected to the plug socket of the external power source PS, it is possible to detect the connection state. Further, according to the embodiment, since it is possible to allow the user to more accurately ascertain the connection state with respect to the charging gun 100, it is possible to prevent the vehicle 200 from being moved in a state in which the charging gun 100 is connected to the vehicle 200.

The above-described embodiment can be expressed as follows.

A detection device including
a storage medium that stores computer-readable instructions of a power source system including a plurality of removable power storage devices, and
a processor connected to the storage medium,
wherein the processor executes the computer-readable instructions to
detect a connection state of a charger connected to an external power source and a connection portion provided in electric equipment having a power storage unit, which is charged with electric power from the external power source, and
detect that the charger is connected to the connection portion in a state in which the charger is connected to the connection portion and electric power is not being supplied from the charger to the electric equipment.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1. A detection device comprising:
a connection portion that is connectable to a charger connected to an external power source; and
a connection detection unit that is provided in electric equipment having a power storage unit, which is charged with electric power from the external power source, and that is configured to detect a connection state of the charger and the connection portion,
wherein the connection detection unit detects that the charger is connected to the connection portion in a state in which the charger is connected to the connection portion and electric power is not being supplied from the charger to the electric equipment.

2. The detection device according to claim 1,
wherein the charger is configured such that one side is connectable to the external power source by a power plug connected to the charger and other side is connectable to the connection portion by a connection plug connected to the charger, and
the connection detection unit detects that the connection plug is connected to the connection portion in a state in which the connection plug is connected to the connection portion and the power plug is not connected to the external power source.

3. The detection device according to claim 2, further comprising:
an input unit configured to receive, as an input, electric power supplied from the charger and electric power supplied from the power storage unit in a state in which the charger is connected to the connection portion; and
a control unit provided in the electric equipment, which is connected to both ends of a first resistor unit provided in the charger,
wherein the input unit that is connected between the first resistor unit and the power storage unit on the electric equipment side, and, when the electric power is supplied from the charger and/or when the electric power is supplied from the power storage unit, that is configured to output the electric power supplied from the charger or the power storage unit to the control unit, and
the connection detection unit is configured to detect the connection state on the basis of a voltage input to the control unit.

4. The detection device according to claim 1,
wherein the connection detection unit is configured to detect the connection state using the electric power supplied from the power storage unit when electric power is not supplied from the external power source.

5. The detection device according to claim 3,
wherein the control unit is configured to notify a user of the electric equipment of information indicating a state in which the charger is connected.

6. A detection method comprising:
by a computer of a detection device,
detecting a connection state between a charger connected to an external power source and a connection portion provided in electric equipment having a power storage unit, which is charged with electric power from the external power source; and
detecting that the charger is connected to the connection portion in a state in which the charger is connected to the connection portion and electric power is not being supplied from the charger to the electric equipment.
